# EUROPEAN PATENT SPECIFICATION

(11) **EP 3 557 308 B1**
(45) Date of publication and mention of the grant of the patent: **26.08.2020**
(21) Application number: 18758081.6
(22) Date of filing: 26.02.2018
(51) Int. Cl.: G02B 27/01, G06F 3/01, G02B 27/00, G02B 27/14

(54) **VIRTUAL REALITY HEAD-MOUNTED APPARATUS**
KOPFMONTIERTE VORRICHTUNG MIT VIRTUELLER REALITÄT
APPAREIL DE RÉALITÉ VIRTUELLE PORTÉ SUR LA TÊTE

(30) Priority: 27.02.2017 CN 201710109486
(43) Date of publication of application: 23.10.2019
(73) Proprietor: Alibaba Group Holding Limited, Grand Cayman (KY)
(72) Inventor: ZHANG, Hong, Hangzhou Zhejiang 311121 (CN)
(74) Representative: Branderhorst, Matthijs Pieter Arie
(86) International application number: PCT/CN2018/077285
(87) International publication number: WO 2018/153371

(56) References cited:
- WO-A1-2015/157016
- CN-A- 104 407 440
- CN-A- 105 718 046
- CN-A- 105 955 491
- CN-A- 106 214 118
- CN-A- 106 406 509
- CN-A- 106 406 543
- CN-A- 106 908 951
- CN-U- 206 584 118
- US-A- 6 043 799
- US-A1- 2016 062 121

## Description

### TECHNICAL FIELD

This application relates to the technical field of virtual reality, and in particular, to a virtual reality head-mounted apparatus.

### BACKGROUND

Virtual reality (VR) technology is a technology that comprehensively utilizes a computer graphics system and various control interfaces to generate an interactive three-dimensional interaction environment on a computer to provide users with immersive experience. In related art, a user can wear a VR head-mounted apparatus, such as VR glasses, a VR helmet, or another VR apparatus, to obtain corresponding VR experience.

Due to unique characteristics of VR scenarios, technical solutions for traditional electronic devices such as mobile phones or PCs may not be applicable to VR scenarios. For example, to acquire an infrared image of an eye of a user wearing a VR apparatus, due to structural limitations within the VR apparatus, image acquisition conditions for conventional methods may be difficult to meet, resulting in difficulties to successfully complete the corresponding tasks such as biometric recognition, eye tracking, etc.

WO 2015/15701 A1 discloses an optical element useful in an optical device for illuminating the pupil of an eye, particularly for use with a head mountable display that can include eye-tracking.

US 2016/062121 A1 relates to methods and systems for the see-through computer display systems with a wide field of view.

### SUMMARY

The invention provides a VR head-mounted apparatus, as set out in the accompanying claims.

### BRIEF DESCRIPTION OF THE DRAWINGS

FIG. 1 is a side cross-sectional view of a VR helmet provided by a first exemplary embodiment of this application.
FIG. 2 is a side cross-sectional view of a VR helmet provided by a second exemplary embodiment of this application.
FIG. 3 is a side cross-sectional view of a VR helmet provided by a third exemplary embodiment of this application.
FIGS. 4-6 are side cross-sectional views of a VR helmet provided by a fourth exemplary embodiment of this application.
FIG. 7 is a schematic view of controlling an angle of a camera provided by an exemplary embodiment of this application.
FIG. 8 is a schematic view of providing a partial-reflection partial-transmission lens and a convex lens through a protective frame provided by an exemplary embodiment of this application.

### DETAILED DESCRIPTION OF THE INVENTION

In order to further explain this application, the following embodiments are provided, using a VR helmet as an example, to introduce the related structure of a VR head-mounted apparatus of this application.

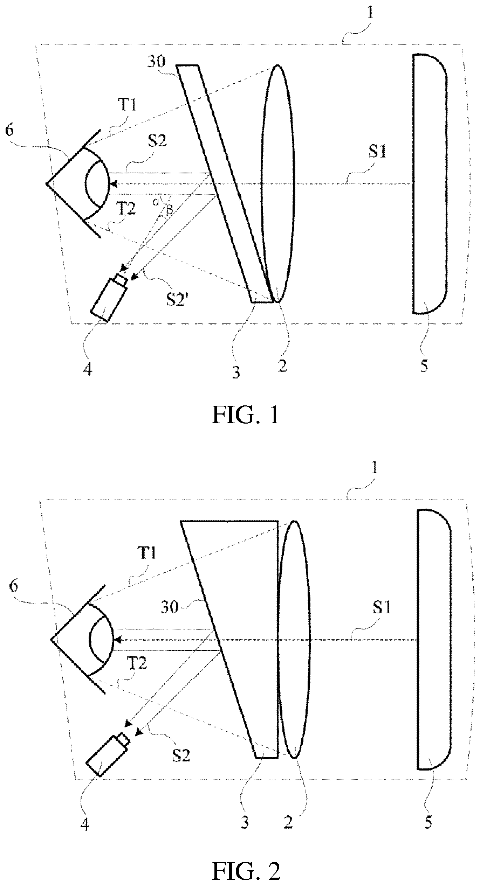

FIG. 1 is a side cross-sectional view of a VR helmet provided by an exemplary embodiment of this application. As shown in FIG. 1, the VR helmet may include: a main body 1, the main body 1 being provided with a convex lens 2 and a VR playing component 5. Further, the main body 1 is further provided with a partial-reflection partial-transmission lens 3 for reflecting infrared light. The partial-reflection partial-transmission lens 3 is located on a side of the convex lens 2 closer to a user (i.e., the partial-reflection partial-transmission lens 3 is located between the convex lens 2 and an eye 6 of the user). Since the partial-reflection partial-transmission lens 3 has a high transmittance for visible light (relative to infrared light) and a low transmittance for infrared light (relative to visible light), VR display content played by the VR playing component 5 may, in a form of visible light S1, go through the partial-reflection partial-transmission lens 3 almost unaffected, and the eye 6 of the user receives the visible light S1 to view of the VR display content, while infrared light S2 emitted from the eye 6 of the user is mostly or almost completely reflected by the partial-reflection partial-transmission lens 3. Corresponding reflected infrared light S2' is acquired by a camera 4 provided in the main body 1, and an infrared image of the eye 6 may be formed from the reflected infrared light S2' to achieve functions such as eye tracking and iris recognition.

More specifically, a lens surface 30 of the partial-reflection partial-transmission lens 3 is disposed obliquely, and positions of the partial-reflection partial-transmission lens 3 and the camera 4 correspond to each other, such that the lens surface 30 of the partial-reflection partial-transmission lens 3 can obliquely reflect the infrared light S2 corresponding to the infrared image of the eye 6 toward the camera 4. For example, in the embodiment shown in FIG. 1, the camera 4 may be located at a lower edge of the main body 1 close to a user side (i.e., left side in FIG. 1), and a lens of the camera 4 faces inward toward the partial-reflection partial-transmission lens 3 to acquire the foregoing reflected infrared light S2'. Then, assuming that an angle between the camera 4 and the infrared light S2 is maintained at α, since the lens surface 30 of the partial-reflection partial-transmission lens 3 is disposed obliquely to reflect the infrared light S2 toward the camera 4 to form the reflected infrared light S2', an angle β between the camera 4 and the reflected infrared light S2' is inevitably smaller than the foregoing angle α. Thus possible deformation and distortion of the infrared image of the eye acquired by the camera 4 may be reduced, which helps to improve the acquisition accuracy for the infrared image of the eye 6, and to further improve the accuracy and precision of subsequent processing such as iris recognition and eye tracking.

Moreover, since the eye 6 of the user tends to be smaller than the convex lens 2, a visible area formed between the eye 6 and the convex lens 2 may have a trapezoidal shape as shown in FIG. 1 (the cross section is trapezoidal; in fact, since the convex lens 2 is round, a 3-D shape corresponding to the visible area is approximately a cone), and a top surface and a bottom surface of the main body 1 are planar. Then, in an example that the camera 4 is located inside an edge of the bottom surface of the main body 1, it is obvious that an installation space for the camera 4 is smaller as the camera moves closer to the convex lens 2 and the installation space for the camera 4 is larger as the camera moves closer to the eye 6. So, when an installation position of the camera 4 is close to the eye 6 (e.g., in the embodiment shown in FIG. 1), a larger installation space (compared to a situation where the installation position of the camera 4 is close to the convex lens 2) can be obtained to adjust an installation angle of the camera 4 (e.g., to make it more parallel with the reflected infrared light S2') and reduce the foregoing angle β, thereby improving the acquisition accuracy of the camera 4 for the infrared image of the eye 6.

It should be noted that the technical solutions of this application may be applied to any type of VR head-mounted apparatus. For example, as shown in FIG. 1, the VR helmet may be an integrated-style VR head-mounted apparatus, that is, the VR helmet may independently implement a VR playing function without resorting to an external apparatus. The VR playing component 5 is pre-built in the VR helmet to implement playing functions such as rendering and displaying of VR display content. Alternatively, the VR helmet may be a split-style VR head-mounted apparatus. For example, when the VR helmet apparatus is paired with a mobile apparatus such as a mobile phone or a tablet, the VR playing component 5 may include a mobile apparatus installed in the VR helmet, and the mobile apparatus may implement rendering through a processor, a graphics card chip, etc., and may perform content display through a screen component. For another example, when the VR helmet is paired with a PC host, a game console, or another external apparatus, the VR playing component 5 may be a display component built in the VR helmet, and the foregoing external apparatus is used to render VR display content and the like.

In the technical solutions of this application, the partial-reflection partial-transmission lens 3 for reflecting infrared light refers to a lens having a low transmittance for an infrared spectrum and a high transmittance for other spectra such as visible light. By blocking the low-transmittance infrared spectrum as much as possible, the partial-reflection partial-transmission lens 3 reflects the infrared spectrum, i.e., "partial-reflection." Meanwhile, other spectra such as high-transmittance visible light can be transmitted through the partial-reflection partial-transmission lens 3 as much as possible, so that the partial-reflection partial-transmission lens 3's blocking or impact on other spectra such as the visible light can be minimized, i.e., "partial-transmission".

For example, the foregoing partial-reflection partial-transmission lens 3 for reflecting infrared light may be an infrared dichroic mirror, such that a visible spectrum may be almost completely transmitted and an infrared spectrum may be almost completely reflected. Specifically, in one case, an infrared reflective film such as a TiO2-Ag-TiO2 infrared reflective film or a ZnS-Ag-ZnS infrared reflective film may be coated on a surface of an optical lens that has a high transmittance for visible light (the visible spectrum may be almost completely transmitted) to form the infrared dichroic mirror. In another case, a lens may be made based entirely on materials in the foregoing infrared reflective film or a similar preparation material to form the infrared dichroic mirror.

As can be seen from the above technical solutions, in this application, a partial-reflection partial-transmission lens 3 is provided in a VR head-mounted apparatus, and a lens surface 30 of the partial-reflection partial-transmission lens 3 is disposed obliquely. Without interfering with a user's viewing of VR display content, an infrared image of an eye of the user is obliquely reflected, and a deviation angle of a camera 4 during the acquisition of the infrared image of the eye can be reduced, thus reducing the deformation and distortion of the infrared image of the eye, and helping to improve the acquisition accuracy for the infrared image of the eye.

In the technical solutions of this application, when the partial-reflection partial-transmission lens 3 has a plate shape as shown in FIG. 1, the lens 3 as a whole may be arranged obliquely, as shown in FIG. 1. In other embodiments, the lens surface 30 may be inclined in other manners. For example, as shown in FIG. 2, when the partial-reflection partial-transmission lens 3 has a wedge-shaped cross section, a bottom surface of the partial-reflection partial-transmission lens 3 is in a vertical direction, and the lens surface 30 is inclined, thereby helping to reduce the installation difficulty of the partial-reflection partial-transmission lens 3 as the installation angle of the partial-reflection partial-transmission lens 3 does not need to be repeatedly adjusted.

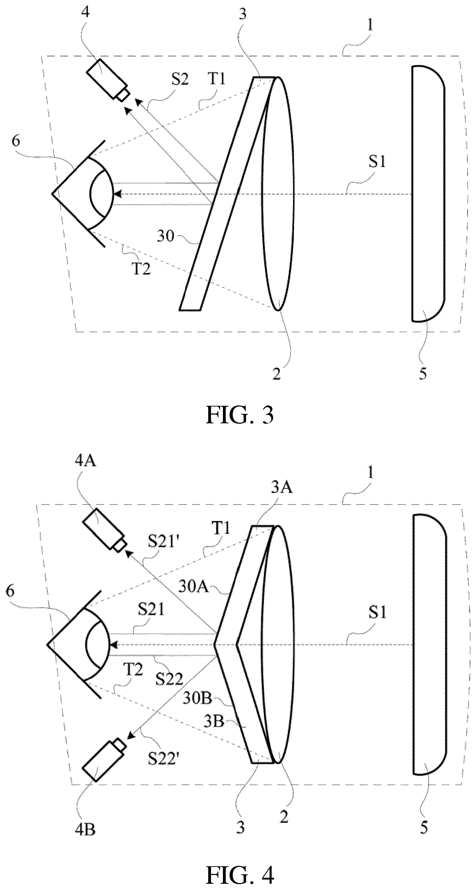

Due to the structural characteristics of a human eye, when the embodiment shown in FIG. 1 or FIG. 2 is utilized, i.e., the lens surface 30 of the partial-reflection partial-transmission lens 3 is inclined downward, the camera 4 is located at a bottom of the main body 1, and the lens of the camera 4 is disposed obliquely upward, the infrared image of the eye 6 of the user can be acquired more completely, clearly and accurately under the same conditions. Certainly, if the embodiment as shown in FIG. 3 is utilized, that is, the lens surface 30 of the partial-reflection partial-transmission lens 3 is inclined upward, the camera 4 is located at a top of the main body 1, and the lens of the camera 4 is disposed obliquely downward, the infrared image of the eye 6 can also be obtained.

FIG. 4 is a side cross-sectional view of a VR helmet provided by an exemplary embodiment of this application. As shown in FIG. 4, in addition to the foregoing plate structure shown in FIGS. 1-3, the partial-reflection partial-transmission lens 3 may have other structures. For example, the partial-reflection partial-transmission lens 3 in FIG. 4 may include an upper lens structure 3A and a lower lens structure 3B disposed obliquely, and a joint of the upper lens structure 3A and the lower lens structure 3B faces the user (i.e., in the embodiment shown in FIG. 4, the upper lens structure 3A has its lower part inclined leftward and its upper part inclined rightward, and the lower lens structure 3B has its upper part inclined leftwards and its lower part inclined rightwards).

Meanwhile, the main body 1 is provided with a first camera 4A and a second camera 4B. The first camera 4A is located at the top of the main body 1 and a lens of the first camera 4A is disposed obliquely downward corresponding to the upper lens structure 3A, and the second camera 4B is located at the bottom of the main body 1 and a lens of the second camera 4B is disposed obliquely upward corresponding to the lower lens structure 3B.

In fact, since users wearing the VR apparatus may have different shapes and sizes on traits such as their heads, faces and eyes, and the VR apparatus is uniformly manufactured by a manufacturer, a positional relationship between the eye 6 and the partial-reflection partial-transmission lens 3 may be different for different users wearing a same VR apparatus. For example, the eye 6 may not be exactly located in a middle position of the main body 1 as shown in FIGS. 1-3, which may result in the camera 4 not being able to completely acquire the infrared image of the eye of the user.

Then, to address the foregoing potential problems, this application, through the embodiments such as those shown in FIG. 4, can ensure that infrared images of the eyes of a user can be completely acquired by the first camera 4A and the second camera 4B, regardless the positional changes, such as an upward shift or a downward shift, that may occur to the eyes of the user.

For example, when the eye 6 is located near the middle position of the main body 1, an upper region of the infrared image of the eye 6 corresponds to a first infrared ray S21, and a lower region corresponds to a second infrared ray S22. The first infrared ray S21 can be reflected by an upper lens surface 30A of the upper lens structure 3A to form a first reflected infrared ray S21', which may be acquired by the first camera 4A. The second infrared ray S22 can be reflected by a lower lens surface 30B of the lower lens structure 3B to form a second reflected infrared ray S22', which may be acquired by the second camera 4B. Then, the first reflected infrared ray S21' and the second reflected infrared ray S22' can be combined to obtain the infrared image of the eye 6.

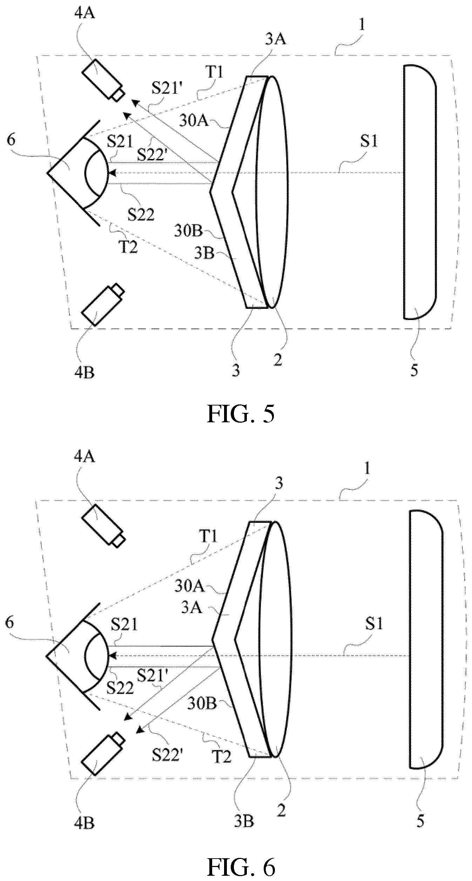

For another example, when the eye 6 is shifted upward, as shown in FIG. 5, the first infrared ray S21 and the second infrared ray S22 may both be emitted toward the upper lens structure 3A and reflected by the upper lens surface 30A of the upper lens structure 3A to form the first reflected infrared ray S21' and the second reflected infrared ray S22'. The first camera 4A may acquire the first reflected infrared ray S21' and the second reflected infrared ray S22', and combined them to form the infrared image of the eye 6.

For another example, when the eye 6 is shifted downward, as shown in FIG. 6, the first infrared ray S21 and the second infrared ray S22 may both be emitted toward the lower lens structure 3B and reflected by the lower lens surface 30B of the lower lens structure 3B to obtain the first reflected infrared ray S21' and the second reflected infrared ray S22', The second camera 4B may acquire the first reflected infrared ray S21' and the second reflected infrared ray S22', and combine them to form the infrared image of the eye 6.

In one embodiment, the upper lens structure 3A and the lower lens structure 3B of the partial-reflection partial-transmission lens 3 shown in FIGS. 4-6 may be symmetrical with respect to a horizontal plane, such that the upper lens structure 3A and the lower lens structure 3B have the same or similar structural strength and stability, and the partial-reflection partial-transmission lens 3 has better overall stability. Certainly, in another embodiment, the upper lens structure 3A and the lower lens structure 3B may also have an asymmetric structure. For example, a larger lower lens structure 3B is utilized for the acquisition of an infrared image of an eye in most cases, and a smaller upper lens structure 3A is utilized for the acquisition of an infrared image of an eye in rare cases where the eye 6 of the user is shifted upward.

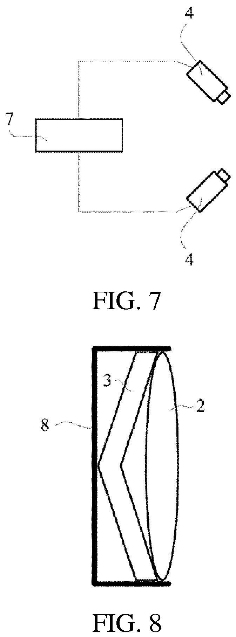

Certainly, in addition to using a specially-shaped partial-reflection partial-transmission lens 3, as shown in the embodiments in FIGS. 4-6, to adapt to different users, this application also provides other processing methods. For example, as shown in FIG. 7, the VR head-mounted apparatus of this application may further include an adjustment component 7. The adjustment component 7 is electrically connected to each camera 4 to perform angle adjustment on the camera 4, such that the lens of the camera 4 is kept toward a virtual image of the infrared image of the eye formed in the partial-reflection partial-transmission lens 3, thereby obtaining a complete, clear and accurate infrared image of the eye.

In addition, in the technical solutions of this application, since the partial-reflection partial-transmission lens 3 is added compared to the related art as shown in FIG. 1, the VR head-mounted apparatus of this application may further include a protective frame 8 as shown in FIG. 8. The protective frame 8 may form an accommodating space adapted to the partial-reflection partial-transmission lens 3 and the convex lens 2, so as to accommodate and fix the partial-reflection partial-transmission lens 3 and the convex lens 2, thereby improving the structural integrity and stability.

It should also be noted that the terms "include", "comprise" and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one......" does not exclude other same elements in the process, method, article or device which include the element.

Reference will now be made in detail to exemplary embodiments, examples of which are illustrated in the accompanying drawings. The above description refers to the accompanying drawings in which the same numbers in different drawings represent the same or similar elements unless otherwise represented. The implementations set forth in the above description of exemplary embodiments do not represent all implementations consistent with this application. Instead, they are merely examples of apparatuses and methods consistent with aspects related to this application as recited in the appended claims.

The terms used in this application are merely for the purpose of describing specific embodiments, and are not intended to limit this application. The terms "a", "said" and "the" of singular forms used in this application and the appended claims are also intended to include plural forms, unless otherwise specified in the context clearly. It should also be understood that, the term "and/or" used herein indicates and includes any or all possible combinations of one or more associated listed items.

It should be understood that although the terms such as first, second, and third may be used herein to describe various information, such information should not be limited to these terms. These terms are merely used for distinguishing information of the same type from each other. For example, within the scope of this application, first information may also be referred to as second information, and similarly, second information may also be referred to as first information. Depending on the context, the term "if' as used herein may be interpreted as "when ..." or "upon ..." or "in response to determining."

## Claims

1. A virtual reality head-mounted apparatus, comprising:
a main body (1), the main body (1) being provided with a convex lens (2); and
a partial-reflection partial-transmission lens (3) for reflecting infrared light provided in the main body (1), the partial-reflection partial-transmission lens (3) being located on a side of the convex lens (2) closer to a user, wherein the partial-reflection partial-transmission lens comprises an upper lens structure (3A) and a lower lens structure (3B) disposed obliquely, and a joint of the upper lens structure and the lower lens structure faces the user;
a first camera (4A) and a second camera (4B), wherein the first camera (4A) is located at a top of the main body and a lens of the first camera is disposed obliquely downward corresponding to the upper lens structure (3A), and the second camera (4B) is located at a bottom of the main body and a lens of the second camera is disposed obliquely upward corresponding to the lower lens structure (3B), and
wherein a lens surface (30A) of the upper lens structure facing the user is inclined upward to reflect an infrared image of an eye of the user to the first camera, and a lens surface (30B) of the lower lens structure facing the user is inclined downward to reflect an infrared image of the eye of the user to the second camera.

2. The apparatus according to claim 1, wherein the partial-reflection partial-transmission lens (3) has a high transmittance for visible light and a low transmittance for infrared light.

3. The apparatus according to claim 1, wherein the partial-reflection partial-transmission lens (3) comprises an infrared dichroic mirror.

4. The apparatus according to claim 1, wherein the first camera (4A) and the second camera (4B) are located outside a visible area of the convex lens (2) with respect to the user.

5. The apparatus according to claim 1, wherein the upper lens structure (3A) and the lower lens structure (3B) are symmetrical with respect to a horizontal plane.

6. The apparatus according to claim 1, further comprising:
a protective frame (8), the protective frame (8) forming an accommodating space adapted to the partial-reflection partial-transmission lens (3) and the convex lens (2), so as to accommodate and fix the partial-reflection partial-transmission lens (3) and the convex lens (2).

7. The apparatus according to claim 1, further comprising:
an adjustment component (7), the adjustment component (7) configured to perform angle adjustment on the first camera (4A) and the second camera (4B), such that the lenses of the first camera and the second camera are kept toward virtual images of the infrared images of the eye formed in, respectively, the upper lens structure (3A) and the lower lens structure (3B) of the partial-reflection partial-transmission lens.

## Patentansprüche

1. Kopfmontierte Vorrichtung für virtuelle Realität, umfassend:
einen Hauptkörper (1), wobei der Hauptkörper (1) mit einer Konvexlinse (2) versehen ist; und
eine teilweise reflektierende teilweise durchlässige Linse (3) zum Reflektieren von Infrarotlicht, welche in dem Hauptkörper (1) bereitgestellt wird, wobei die teilweise reflektierende teilweise durchlässige Linse (3) auf einer Seite der Konvexlinse (2) näher zu einem Benutzer angeordnet ist, wobei die teilweise reflektierende teilweise durchlässige Linse eine obere Linsenstruktur (3A) und eine untere Linsenstruktur (3B) umfasst, welche schräg angeordnet sind, und wobei eine Verbindung zwischen der oberen Linsenstruktur und der unteren Linsenstruktur dem Benutzer zugewandt ist;
eine erste Kamera (4A) und eine zweite Kamera (4B), wobei die erste Kamera (4A) auf einer Oberseite des Hauptkörpers angeordnet ist und eine Linse der ersten Kamera schräg nach unten angeordnet ist, entsprechend der oberen Linsenstruktur (3A) und die zweite Kamera (4B) auf einer Unterseite des Hauptkörpers angeordnet ist und eine Linse der zweiten Kamera schräg nach oben angeordnet ist, entsprechend der unteren Linsenstruktur (3B), und
wobei eine Linsenfläche (30A) der oberen Linsenstruktur, welche dem Benutzer zugewandt ist, nach oben geneigt ist, um ein Infrarotbild eines Auges des Benutzers zur ersten Kamera hin zu reflektieren, und wobei eine Linsenfläche (30B) der unteren Linsenstruktur, welche dem Benutzer zugewandt ist, nach unten geneigt ist, um ein Infrarotbild des Auges des Benutzers zur zweiten Kamera hin zu reflektieren.

2. Vorrichtung nach Anspruch 1, wobei die teilweise reflektierende teilweise durchlässige Linse (3) eine hohe Durchlässigkeit für sichtbares Licht und eine niedrige Durchlässigkeit für Infrarotlicht aufweist.

3. Vorrichtung nach Anspruch 1, wobei die teilweise reflektierende teilweise durchlässige Linse (3) einen infraroten dichroitischen Spiegel umfasst.

4. Vorrichtung nach Anspruch 1, wobei die erste Kamera (4A) und die zweite Kamera (4B) außerhalb eines sichtbaren Bereichs der Konvexlinse (2) relativ zu dem Benutzer angeordnet sind.

5. Vorrichtung nach Anspruch 1, wobei die obere Linsenstruktur (3A) und die untere Linsenstruktur (3B) relativ zu einer horizontalen Ebene symmetrisch sind.

6. Vorrichtung nach Anspruch 1, ferner umfassend:
einen Schutzrahmen (8), wobei der Schutzrahmen (8) einen Aufnahmeraum formt, welcher der teilweise reflektierenden teilweise durchlässigen Linse (3) und der Konvexlinse (2) angepasst ist, sodass dieser die teilweise reflektierende teilweise durchlässige Linse (3) und die Konvexlinse (2) aufnimmt und fixiert.

7. Vorrichtung nach Anspruch 1, ferner umfassend:
eine Einstellungskomponente (7), wobei die Einstellungskomponente (7) konfiguriert ist, um eine Winkeleinstellung auf der ersten Kamera (4A) und auf der zweiten Kamera (4B) so auszuführen, dass die Linsen der ersten Kamera und der zweiten Kamera auf virtuelle Bilder der Infrarotbilder des Auges gerichtet gehalten werden, welche jeweils in der oberen Linsenstruktur (3A) und der unteren Linsenstruktur (3B) der teilweise reflektierenden teilweise durchlässigen Linse geformt sind.

## Revendications

1. Appareil de réalité virtuelle porté sur la tête, comprenant :
un corps principal (1), le corps principal (1) étant muni d'une lentille convexe (2) ; et
une lentille à réflexion partielle et transmission partielle (3) pour réfléchir la lumière infrarouge, fournie dans le corps principal (1), la lentille à réflexion partielle et transmission partielle (3) étant localisée sur un côté de la lentille convexe (2) plus près d'un utilisateur, dans lequel la lentille à réflexion partielle et transmission partielle comprend une structure de lentille supérieure (3A) et une structure de lentille inférieure (3B) qui sont disposées à l'oblique, et une jonction de la structure de lentille supérieure et de la structure de lentille inférieure fait face à l'utilisateur ;
une première caméra (4A) et une seconde caméra (4B), dans lequel la première caméra (4A) est localisée au niveau d'un sommet du corps principal et un objectif de la première caméra est disposé à l'oblique vers le bas en correspondance avec la structure de lentille supérieure (3A), et la seconde caméra (4B) est localisée au niveau d'un fond du corps principal et un objectif de la seconde caméra est disposé à l'oblique vers le haut en correspondance avec la structure de lentille inférieure (3B) ; et
dans lequel une surface de lentille (30A) de la structure de lentille supérieure qui fait face à l'utilisateur est inclinée vers le haut pour réfléchir une image infrarouge d'un œil de l'utilisateur sur la première caméra, et une surface de lentille (30B) de la structure de lentille inférieure qui fait face à l'utilisateur est inclinée vers le bas pour réfléchir une image infrarouge de l'œil de l'utilisateur sur la seconde caméra.

2. Appareil selon la revendication 1, dans lequel la lentille à réflexion partielle et transmission partielle (3) présente une transmittance élevée pour la lumière visible et une transmittance faible pour la lumière infrarouge.

3. Appareil selon la revendication 1, dans lequel la lentille à réflexion partielle et transmission partielle (3) comprend un miroir dichroïque infrarouge.

4. Appareil selon la revendication 1, dans lequel la première caméra (4A) et la seconde caméra (4B) sont localisées à l'extérieur d'une zone visible de la lentille convexe (2) par rapport à l'utilisateur.

5. Appareil selon la revendication 1, dans lequel la structure de lentille supérieure (3A) et la structure de lentille inférieure (3B) sont symétriques par rapport à un plan horizontal.

6. Appareil selon la revendication 1, comprenant en outre :
une structure de protection (8), la structure de protection (8) formant un espace de logement qui est adapté par rapport à la lentille à réflexion partielle et transmission partielle (3) et à la lentille convexe (2) de telle sorte qu'elle loge et fixe la lentille à réflexion partielle et transmission partielle (3) et la lentille convexe (2).

7. Appareil selon la revendication 1, comprenant en outre :
un composant de réglage (7), le composant de réglage (7) étant configuré pour réaliser un réglage d'angle sur la première caméra (4A) et sur la seconde caméra (4B) de telle sorte que les objectifs de la première caméra et de la seconde caméra soient maintenus en direction d'images virtuelles des images infrarouges de l'œil qui sont respectivement formées dans la structure de lentille supérieure (3A) et dans la structure de lentille inférieure (3B) de la lentille à réflexion partielle et transmission partielle.
